# EUROPEAN PATENT APPLICATION

(11) **EP 1 099 912 A1**
(43) Date of publication of application: **16.05.2001**
(21) Application number: 00203964.2
(22) Date of filing: 10.11.2000
(51) Int. Cl.: F24F 11/053

(54) **Ventilation control system**

(30) Priority: 12.11.1999 NL 1013572
(71) Applicant: Itho B.V., 3115 HB Schiedam (NL)
(72) Inventor: van Bohemen, Leonardus Hendrikus Josef, 2631 GN Nootdorp (NL); Willemse, Johannes Cornelis, 5175 BM Loon op Zand (NL); Schut, Coenraad Joannes Bartholomeus, 3208 BE Spijkenisse (NL)
(74) Representative: Prins, Adrianus Willem

(57) **Abstract**

A ventilation control system for a space (1) divided into several compartments (2), wherein in separate compartments (2) an individual ventilation control has to be realised, is provided with a ventilation unit (7) contained in each compartment. Each of the ventilation units (7) comprises a ventilator (11), a control valve (12) for this ventilator and an air flow meter (13), with the control valve and the flow meter being included in a first control circuit to enable, in cooperation with a ventilation computer (4), adjustment of the degree of ventilation in this compartment. As soon as one of the control valves (12) in the compartments has reached a specific maximally open position, a central control unit (5) is activated by means of the ventilation computer (4) to enable speeding up of the ventilators (11) in the compartments. If required, the air flow in the compartments (2), the control valves (12) of which have not reached the above maximum position, can be throttled by means of the control valves (12).

## Description

The present invention relates to a ventilation control system for controlling the amount of air passed through a space divided into several compartments, wherein in separate compartments an individual ventilation control has to be realised.

Such a situation occurs, inter alia, in pig houses where a specific group of pigs is present in each compartment. It is known to dispose in each compartment a separate ventilation control, with the degree of ventilation in the separate compartments being controlled from a ventilation computer. The degree of ventilation will then depend on, inter alia, the temperature in the compartments, the numbers of pigs therein, the age of the pigs, the kind of pigs (new-born or pork pigs) etc. Such a known ventilation control comprises per compartment a control circuit with a ventilator, a flow meter, in particular a measuring ventilator, for determining the degree of ventilation realised by means of the ventilator, and a control unit for the ventilator, wherein on the basis of the output signal of the measuring ventilator and depending on the above factors the ventilation computer supplies a control signal to the control unit for adjusting the ventilator. The control unit may be designed in the form of a triac control unit in which, however, relatively much heat is dissipated in each of the control circuits, or in the form of a frequency control unit which, to be sure, is energetically more advantageous than a triac control unit, but the cost of which is relatively high, which is in particular manifest with larger numbers of compartments.

It is an object of the invention to provide a ventilation control system which is energetically more advantageous and also involves less cost. It is a further object of the invention to provide a ventilation control system which can be built without appreciable additional cost into all kinds of possible existing spaces, in particular into all kinds of existing types of pig houses.

According to the invention this object is reached if the ventilation control system is provided with a ventilation unit contained in each compartment, which comprises a ventilator, a control valve for this ventilator and an air flow meter, in particular a measuring ventilator, with the control valve and the flow meter being included in a first control circuit to enable, in co-operation with a ventilation computer, adjustment of the degree of ventilation in this compartment, which ventilation control system is further provided with a central control unit, in particular a frequency control unit, to enable, as soon as one of the control valves in the compartments has reached a specific maximally open position, speeding up of the ventilators in the compartments under control of the ventilation computer, while the air flow of the ventilators in the compartments, the control valves of which have not reached this maximum position, can be throttled again by means of the control valves. In this connection it is to be noted that the term maximally open position is understood to mean the position defined as maximal, even if the valve can be opened still wider.

In other words, per compartment a separate ventilator valve control is provided, while, in addition, a central control is provided for simultaneously controlling the ventilators in the separate compartments. When, as a result, the ventilation in the other compartments increases too much, the control circuits in these other compartments will be controlled such that the control valves throttle the air ventilation. The ventilation units with the ventilators, the control valves and the flow meters can be easily disposed in the compartments, while the ventilation computer with the central control unit can be installed in a suitable place in the above space, so that the whole system can always be included in an existing space (stable) without requiring further adaptation or alteration of the space. Furthermore, a central ventilator speed control in combination with a valve control in the separate compartments appears to be energetically more advantageous than a ventilator speed control in all the compartments separately, while a saving in cost is achieved if only one ventilator unit (frequency control unit) is provided.

Although, in principle, one ventilation computer is sufficient, besides such a central ventilation computer one or more further computers may be provided for the separate compartments or groups of compartments, which further computers communicate with the central computer and, in co-operation therewith, ensure the control of the ventilators and control valves in the separate compartments.

The invention will now be explained in more detail with reference to the accompanying drawings, in which:
Fig. 1 is a schematic representation of an exemplary embodiment of a ventilation control system according to the invention, used in a pig house;
Fig. 2 is a schematic representation of a ventilation unit according to the invention; and
Fig. 3 shows the cumulative energy consumption for a known climate control provided for each compartment, with a triac control unit or a frequency control unit, and the cumulative energy consumption for a climate control according to the invention.

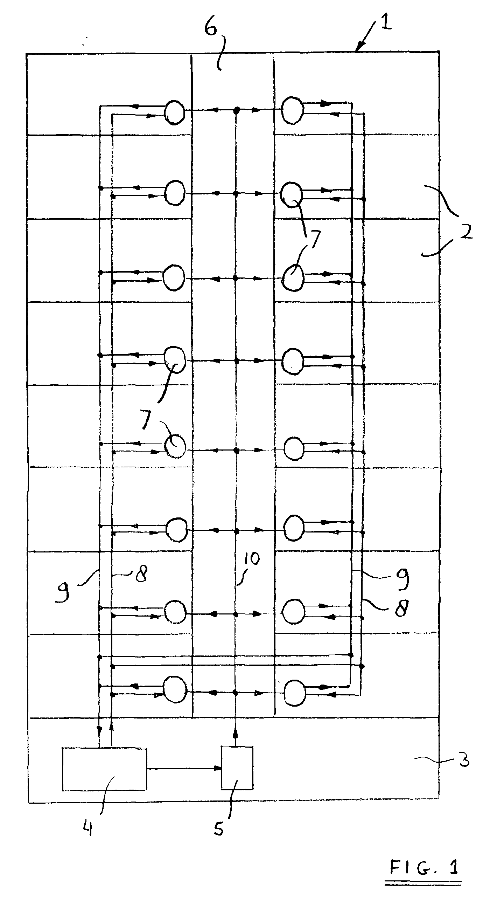

Fig. 1 represents a pig house 1, which comprises sixteen compartments 2 for pigs, and a further space 3, in which a ventilation computer 4 and a frequency control unit 5 are disposed. The sixteen compartments are arranged in two groups of eight compartments with a gangway 6 between them. Installed in each compartment 2 is a ventilation unit 7. The ventilation computer 4 communicates with each ventilation unit 7 separately with a signal supply line 8 and a signal discharge line 9, while the frequency control unit 5 connected to the ventilation computer 4 communicates with all the ventilation units over the same line 10.

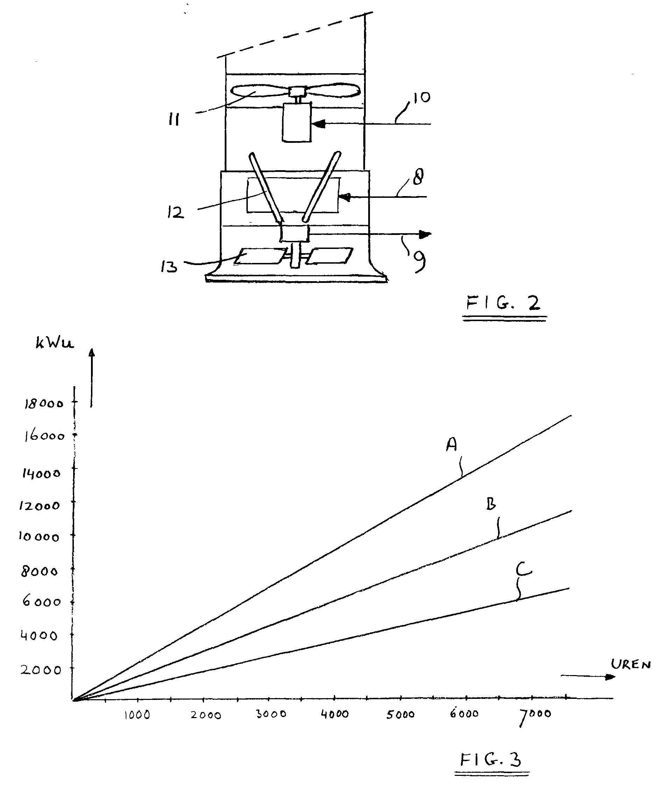

Fig. 2 shows a ventilation unit 7, which is built up from a ventilator 11, a control valve 12 for this ventilator 11 and a measuring ventilator 13. The control valve 12 and the measuring ventilator 13 are included in a control circuit to be enable, in co-operation with the ventilation computer 4, adjustment of the degree of ventilation in a relevant compartment.

The operation of the ventilation control system is as follows:

Starting from a specific situation in which a specific number of pigs of a specific kind and of a known age category is present in the compartments, at a given temperature a certain air ventilation will exist in each of the compartments, which is determined by the speed of the ventilator 11 and the position of the control valve 12. All the ventilators 11 run at the same speed. If, for any reason whatever, the temperature in one of the compartments is too high and more ventilation is required, the ventilation computer 4 will supply a control signal over the relevant line 8 to further open the valve 12. The valve 12 can be opened increasingly wider, until a specific defined (maximum) position has been reached. This fact and the air flow strength determined by the measuring ventilator 9 are reported back to the ventilation computer 4 over the relevant line 9. When the ventilation in the relevant compartment is still insufficient, the ventilation computer 4 will supply a control signal to the frequency control unit 5, which then increases the speed of the ventilator 11, until the ventilation computer 4 considers the ventilation determined by the measuring ventilator 9 to be sufficient. This, however, could result in too much ventilation in the other compartments. In these compartments the separate valves 12 will be adjusted under control of the ventilation computer to the position required for the relevant compartments, i.e. the air flows in the separate compartments will be throttled such that in each compartment the ventilation required therefor is realised.

To enable a comparison of the energy consumption of the ventilation control system according to the invention with known systems in which an independently operative ventilation control system is provided in all the compartments, the energy consumption when using these systems is measured over a period of almost one year. The results are given in Fig. 3. Line A indicates the cumulative energy consumption of sixteen independently operative ventilation control systems with a triac control system as control unit for the ventilator in each compartment. Line B indicates the cumulative energy consumption of sixteen independently operative ventilation control systems with a frequency control unit for the ventilator in each compartment. Line C indicates the cumulative energy consumption of the ventilation control system according to the invention for sixteen compartments, as shown in Fig. 1. When the energy consumption after 7500 hours according to line A is assumed to be 100%, the energy consumption after 7500 hours according to line B appears to be 66.9%, and the energy consumption after 7500 hours according to line C appears to be 39.9%. Although in Fig. 3 lines A, B and C are represented as straight lines, they actually contain fluctuations, in particular as a result of changing outside air temperatures.

The invention is not limited to the exemplary embodiment described herein with reference to the figures, but comprises all kinds of modifications, of course as far as falling within the scope of protection of the appended claims. Thus, for instance, any desired number of compartments is possible. The use is not limited to a pig house, but is also possible for hutches for rabbit breeding farms.

## Claims

1. A ventilation control system for controlling the amount of air passed through a space divided into several compartments, wherein in separate compartments an individual ventilation control has to be realised, which ventilation control system is provided with a ventilation unit contained in each compartment, which comprises a ventilator, a control valve for this ventilator and an air flow meter, in particular a measuring ventilator, with the control valve and the flow meter being included in a first control circuit to enable, in co-operation with a ventilation computer, adjustment of the degree of ventilation in this compartment, which ventilation control system is further provided with a central control unit, in particular a frequency control unit, to enable, as soon as one of the control valves in the compartments has reached a specific maximally open position, speeding up of the ventilators in the compartments under control of the ventilation computer, while the air flow of the ventilators in the compartments, the control valves of which have not reached this maximum position, can be throttled again by means of the control valves.
